(19) **Europäisches Patentamt / European Patent Office / Office européen des brevets**

(11) **EP 4 317 468 A1**

(12) **EUROPEAN PATENT APPLICATION**
published in accordance with Art. 153(4) EPC

(43) Date of publication:
**07.02.2024 Bulletin 2024/06**

(21) Application number: **22775868.7**

(22) Date of filing: **28.03.2022**

(51) International Patent Classification (IPC):
*C21D 8/12* (2006.01)        *C22C 38/00* (2006.01)
*C22C 38/60* (2006.01)        *H01F 1/147* (2006.01)

(52) Cooperative Patent Classification (CPC):
**C21D 8/12; C22C 38/00; H01F 1/147; C22C 38/60**

(86) International application number:
**PCT/JP2022/015193**

(87) International publication number:
**WO 2022/203087 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021   JP 2021053620**

(71) Applicant: **NIPPON STEEL CORPORATION**
**Chiyoda-ku**
**Tokyo 100-8071 (JP)**

(72) Inventors:
• **TANAKA, Tomohito**
  **Tokyo 100-8071 (JP)**
• **IWAKI, Masataka**
  **Tokyo 100-8071 (JP)**
• **MORISHIGE, Nobusato**
  **Tokyo 100-8071 (JP)**
• **KATAOKA, Takashi**
  **Tokyo 100-8071 (JP)**
• **HAMAMURA, Hideyuki**
  **Tokyo 100-8071 (JP)**

(74) Representative: **Vossius & Partner**
**Patentanwälte Rechtsanwälte mbB**
**Siebertstraße 3**
**81675 München (DE)**

(54) **GRAIN-ORIENTED ELECTROMAGNETIC STEEL SHEET AND METHOD FOR PRODUCING SAME**

(57)    This grain-oriented electrical steel sheet includes a base steel sheet, a glass coating formed on the base steel sheet, and a tension-applied insulation coating formed on the glass coating, in the base steel sheet, a plurality of linear strains that extend continuously or intermittently in a direction intersecting with a rolling direction are present, and intervals in the rolling direction of the plurality of linear strains adjacent to each other are 10 mm or less, in a region where the strains are present, a closure domain is present, a length d of the closure domain in a sheet thickness direction from a surface of the base steel sheet is 30 to 60 $\mu$m, a length w in the rolling direction is 200 $\mu$m or less, and a ratio m/d of a depth m from the surface of the base steel sheet where a compressive strain in the rolling direction present in the closure domain exhibits a maximum value to the length d is in a range of more than 0.30 and less than 0.90.

EP 4 317 468 A1

**Description**

[Technical Field of the Invention]

The present invention relates to a grain-oriented electrical steel sheet and a method for manufacturing the same.
Priority is claimed on Japanese Patent Application No. 2021-053620, filed March 26, 2021, the content of which is incorporated herein by reference.

[Related Art]

Grain-oriented electrical steel sheets are soft magnetic materials and are mainly used as core materials of transformers. Therefore, grain-oriented electrical steel sheets are required to have magnetic characteristics such as high magnetization characteristics and a low iron loss.
The iron loss is a power loss that is consumed as heat energy in the case of exciting a core with an AC magnetic field, and the iron loss is required to be as low as possible from the viewpoint of energy saving. The degree of iron loss is affected by magnetization ratio, sheet thickness, coating tension, the amount of impurities, electric resistivity, grain sizes, magnetic domain sizes, and the like. Although a variety of techniques have been thus far developed regarding grain-oriented electrical steel sheets, research and development for reducing iron loss is still underway in order to increase energy efficiency.
For example, Patent Document 1 discloses a method for manufacturing a grain-oriented electrical steel sheet having a step of irradiating a surface of a grain-oriented electrical steel sheet with a focused continuous-wave laser beam while scanning the grain-oriented electrical steel sheet in a direction inclined with respect to a rolling direction and a step of repeating irradiation while shifting portions to be scanned with the continuous-wave laser beams at predetermined intervals, in which, when an average power of the continuous-wave laser beams is represented by P (W), a velocity of the scanning is represented by Vc (mm/s), the predetermined intervals are represented by PL (mm), and an average irradiation energy density Ua is defined as $Ua = P/(Vc \times PL)$ (mJ/mm$^2$), magnetic domains are controlled by irradiation with the laser beams in a manner that $1.0\ mm \leq PL \leq 3.0\ mm$ and $0.8\ mJ/mm^2 \leq Ua \leq 2.0\ mJ/mm^2$ are satisfied.
Patent Document 1 shows that iron losses can be easily reduced in both directions of an L direction and a C direction of the grain-oriented electrical steel sheet while ensuring high productivity.
In addition, Patent Document 2 discloses a method for manufacturing a grain-oriented electrical steel sheet in which linear closure domains are formed approximately perpendicular to a rolling direction of the steel sheet at approximately constant intervals by scanning and irradiation with continuously oscillating laser beams to improve iron loss characteristics.
Patent Document 2 shows that, when a laser is in a TEM$_{00}$ mode in which the laser beam intensity profile in a cross section perpendicular to a beam propagation direction has the maximum intensity near the center of the optical axis, and the focused diameter d [mm] in the rolling direction of the irradiation beam, the scanning linear velocity V [mm/s] of the laser beam, and the average output P [W] of the laser are in ranges of $0 < d \leq 0.2$ and $0.001 \leq P/V \leq 0.012$, a grain-oriented electrical steel sheet having a reduced iron loss can be obtained.
In addition, Patent Document 3 discloses a method for manufacturing a grain-oriented electrical steel sheet, in which a surface of a grain-oriented electrical steel sheet is irradiated with a laser beam at equal intervals to improve magnetic characteristics.
In Patent Document 3, it is shown that the laser is a pulse-oscillating Q-switch CO$_2$ laser, the irradiation beam shape is an ellipse having a major axis in the sheet width direction, the irradiation power density of the laser pulse is set to be equal to or less than the membrane damage threshold on the surface of the steel sheet, thereby suppressing the generation of a laser irradiation mark, and the long axis length of the elliptical beam is set to be equal to or more than the pulse beam irradiation interval in the sheet width direction by suppressing laser irradiation marks, whereby continuous pulse beams are superimposed on the surface of the steel sheet, a cumulative irradiation energy large enough for magnetic characteristics improvement is imparted, and an efficient magnetic domain control effect can be obtained.
Incidentally, in recent years, there has been an increasing demand for reduction of noise and vibration in electromagnetic application equipment such as transformers, and grain-oriented electrical steel sheets that are used for cores of transformers are required to be a material suitable for not only a low iron loss but also low noise or low vibration. It is said that one of the causes in materials for the noise or vibration of transformers is the magnetostriction of grain-oriented electrical steel sheets. The magnetostriction mentioned herein refers to vibration that is shown in the rolling direction of a grain-oriented electrical steel sheet caused by a slight change in the outer shape of the grain-oriented electrical steel sheet in association with a change in the intensity of magnetization when the grain-oriented electrical steel sheet has been excited by alternating currents. The magnitude of this magnetostriction is as extremely small as an order of 10$^{-6}$, but this magnetostriction generates vibration in cores, the vibration propagates into an external structure such as a tank of a transformer and turns into noise.

Laser irradiation to a grain-oriented electrical steel sheet as proposed in Patent Documents 1 to 3 described above is effective for reducing iron losses, but there is a problem in that a closure domain that is formed by laser irradiation increases magnetostriction, whereby noise when the grain-oriented electrical steel sheet has been incorporated into a transformer becomes large (the noise characteristics deteriorate).

With respect to such a problem, for example, Patent Document 4 discloses a grain-oriented electrical steel sheet having a low iron loss and in which a noise is small noise when incorporated into a transformer.

Patent Document 4 shows that, when closure domain regions having a width in the rolling direction on the surface of the steel sheet changing periodically are formed, each of the closure domain regions satisfies conditions that the ratio (Wmax/Wmin) of the maximum width Wmax to the minimum width Wmin in the rolling direction on the surface of the steel sheet is 1.2 or more and 2.2 or less, the average width Wave in the rolling direction on the surface of the steel sheet is 80 $\mu$m or more and 250 $\mu$m or less, the maximum depth D in the sheet thickness direction is 32 $\mu$m or more, and (Wave $\times$ D)/s is 0.0007 mm or more and 0.0016 mm or less, it is possible to realize a more favorable iron loss/noise balance than in the related art.

In addition, Patent Document 5 describes a grain-oriented electrical steel sheet in which local strains are introduced in a direction crossing a rolling direction at periodic intervals in the rolling direction, in which linear closure domain portions are formed near the strains, in a demagnetization state, comb-like magnetic domains having a rolling-direction length of 1.2 mm or more elongated in the rolling direction from the closure domain portion are present, and, furthermore, in regions along the closure domain portions, 1.8 or more magnetic domains per millimeter are formed on average, and in a case where linear intervals of the closure domains are represented by s (mm), a width of the closure domain portion: w (mm) and a depth of the closure domain portion in a sheet thickness direction: h ($\mu$m) satisfy a relationships of 4 mm $\leq$ s $\leq$ 1.5 mm and hw/s $\leq$ 0.9 $\mu$m.

Patent Document 5 suggests that the strain introduction amount index represented by hw/s affects iron losses and noise.

However, in the techniques of Patent Documents 4 and 5, it is assumed that, in order to impart periodicity to the rolling direction widths of the closure domains and to control the number of comb-like magnetic domains, a special electron beam irradiation condition becomes necessary, and it is difficult to obtain high productivity.

In addition, additionally, as a technique for controlling a closure domain, for example, Patent Documents 6 and 7 disclose methods for manufacturing a grain-oriented electrical steel sheet in which a closure domain is formed without damaging a coating and a grain-oriented electrical steel sheet having an extremely low transformer iron loss and BF is provided.

In addition, Patent Document 8 shows that a grain-oriented electrical steel sheet having an iron loss reduced in a wide sheet thickness range can be obtained by forming a closure domain shape that is advantageous for iron loss reduction using the characteristics of an electron beam.

In addition, Patent Document 9 discloses a grain-oriented electrical steel sheet for a core having linear strains formed by an electron beam emitted from $LaB_6$ in directions at 60° to 120° with respect to a rolling direction in a steel sheet surface.

In addition, Patent Document 10 discloses a grain-oriented electrical steel sheet having excellent insulation properties and corrosion resistance in which the area proportion of a beam irradiation mark in a beam irradiation region is controlled and a method for manufacturing the same.

However, in all of the techniques, the closure domains are controlled to reduce iron losses, and there have been no studies regarding the control of a closure domain for realizing low noise.

[Prior Art Document]

[Patent Document]

[Patent Document 1] Japanese Patent No. 4669565
[Patent Document 2] Japanese Patent No. 4510757
[Patent Document 3] Japanese Patent No. 3361709
[Patent Document 4] Japanese Patent No. 6060988
[Patent Document 5] Japanese Patent No. 6176282
[Patent Document 6] Japanese Patent No. 6169695
[Patent Document 7] Japanese Patent No. 6245296
[Patent Document 8] PCT International Publication No. WO 2014/068962
[Patent Document 9] Japanese Patent No. 5954421
[Patent Document 10] PCT International Publication No. WO 2013/099272

[Disclosure of the Invention]

[Problems to be Solved by the Invention]

As described above, conventionally, grain-oriented electrical steel sheets having iron loss characteristics and noise characteristics improved sufficiently at the same time and methods for manufacturing the same have not been disclosed.

An object of the present invention is to provide a grain-oriented electrical steel sheet having excellent iron loss characteristics (particularly, the improvement ratio of the iron loss by energy ray irradiation) and noise characteristics and a method for manufacturing the same.

[Means for Solving the Problem]

In a grain-oriented electrical steel sheet, an irradiated portion is rapidly heated and rapidly cooled by irradiation with an energy ray. As a result, a strain (residual strain) is generated in the steel sheet near the irradiated portion. In a case where the strain is a compressive strain in the rolling direction or a tensile strain in the sheet thickness direction, a closure domain is formed in a region where this strain is generated. The formation of this closure domain is a driving force of 180° magnetic domain segmentation parallel/antiparallel to the rolling direction and is thus advantageous for a decrease in the iron loss. However, ordinarily, when a closure domain is formed, the degree of magnetostriction becomes large, and thus noise when the steel sheet is incorporated into a transformer becomes large (the noise characteristics deteriorate).

The present inventors conducted an intensive investigation regarding a relationship between the size of this closure domain and, the iron loss characteristics and the noise characteristics. As a result of the study, it was found that, when the depth of the closure domain is controlled within a predetermined range, it is possible to satisfy both a low iron loss and low noise after energy ray irradiation. In addition, it was found that, when not only the size of the closure domain but also the state of strains in the closure domain are controlled, a more excellent iron loss/nose balance can be obtained. The energy ray mentioned herein refers to a laser beam or an electron beam.

The present invention has been made in view of the above-described findings. The gist of the present invention is as described below.

[1] A grain-oriented electrical steel sheet according to one aspect of the present invention includes a base steel sheet, a glass coating formed on the base steel sheet, and a tension-applied insulation coating formed on the glass coating, in the base steel sheet, a plurality of linear strains that extend continuously or intermittently in a direction intersecting with a rolling direction are present, and intervals in the rolling direction of the plurality of linear strains adjacent to each other are 10 mm or less, in a region where the strains are present, a closure domain is present, a length d of the closure domain in a sheet thickness direction from a surface of the base steel sheet is 30 to 60 $\mu$m, a length w of the closure domain in the rolling direction is 200 $\mu$m or less, and a ratio m/d of a depth m from the surface of the base steel sheet where a compressive strain in the rolling direction present in the closure domain exhibits a maximum value, to the length d is in a range of more than 0.30 and less than 0.90.

[2] A method for manufacturing a grain-oriented electrical steel sheet according to another aspect of the present invention includes a magnetic domain segmentation step of, with respect to a grain-oriented electrical steel sheet including a base steel sheet, a glass coating formed on the base steel sheet, and a tension-applied insulation coating formed on the glass coating, irradiating a surface of the tension-applied insulation coating with an energy ray to introduce a plurality of linear strains that extend in a direction intersecting with a rolling direction into a vicinity of a surface of the base steel sheet, in the magnetic domain segmentation step, among the plurality of linear strains, intervals in the rolling direction of linear strains adjacent to each other are 10 mm or less, an energy ray power density Ip in a unit of W/mm$^2$ that is defined by (P/S) using an energy ray output P in a unit of W and an energy ray irradiation cross-sectional area S in a unit of mm$^2$ satisfies the following expression (1), an energy ray input energy Up in a unit of J/mm that is defined by (P/Vs) using the energy ray output P and an energy ray scanning velocity Vs in a unit of mm/sec satisfies the following expression (2), and a beam aspect ratio that is defined by (dl/dc) using a diameter dl in a direction perpendicular to a beam scanning direction and a diameter dc in the beam scanning direction of the energy ray in a unit of $\mu$m and the dl each satisfy the following expression (3) and the following expression (4).

$$250 \leq Ip \leq 5,200 \quad (1)$$

$$0.007 < Up \leq 0.050 \qquad (2)$$

$$0.0010 < dl/dc < 1.0000 \quad (3)$$

$$10 \leq dl < 200 \qquad (4)$$

[Effects of the Invention]

According to the above-described aspects of the present invention, it is possible to provide a grain-oriented electrical steel sheet having excellent iron loss characteristics and noise characteristics and a method for manufacturing the same.

[Brief Description of the Drawings]

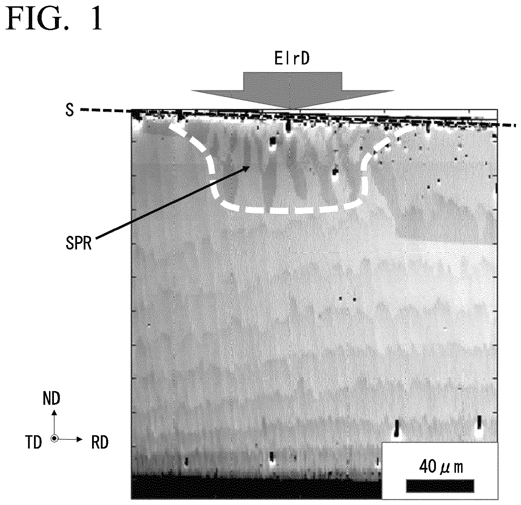

FIG. 1 is a view showing an example of a magnetic domain contrast observed in a reflected electron image of a cross section of a steel sheet irradiated with an energy ray.

[Embodiments of the Invention]

A grain-oriented electrical steel sheet according to one embodiment of the present invention (the grain-oriented electrical steel sheet according to the present embodiment) includes a base steel sheet, a glass coating formed on the base steel sheet, and a tension-applied insulation coating formed on the glass coating.
In addition, in the base steel sheet, a plurality of linear strains (residual strains) that extend continuously or intermittently in a direction intersecting with a rolling direction are formed substantially parallel to each other, and intervals in the rolling direction of the plurality of linear strains adjacent to each other are 10 mm or less, in a region where the strains are present, a closure domain having a length d in a sheet thickness direction from a surface of the base steel sheet is 30 to 60 $\mu$m and a length w in the rolling direction of 200 $\mu$m or less is present, and a ratio m/d of a depth m from the surface of the base steel sheet where a compressive strain in the rolling direction present in the closure domain exhibits a maximum value to the length d of the closure domain in a sheet thickness direction is in a range of more than 0.30 and less than 0.90.
Hereinafter, the grain-oriented electrical steel sheet according to the present embodiment will be described.

<Base steel sheet>

(Chemical composition)

The grain-oriented electrical steel sheet according to the present embodiment is largely characterized by a strain and a closure domain, and the base steel sheet in the grain-oriented electrical steel sheet is not limited in terms of the chemical composition, which may be in a well-known range. For example, in order to obtain characteristics that are ordinarily required as grain-oriented electrical steel sheets, the fact that the base steel sheet contains the following as a chemical composition will be exemplified. In the present embodiment, "%" relating to the chemical composition is "mass%" unless otherwise specified.

C: 0.010% or less

C (carbon) is an element effective for the microstructure control of the steel sheet in steps until the completion of a decarburization annealing step in manufacturing steps. However, when the C content of the base steel sheet of the grain-oriented electrical steel sheet, which is a product sheet, exceeds 0.010%, the magnetic characteristics (iron loss characteristics or magnetic flux density) deteriorate. Therefore, in the base steel sheet of the grain-oriented electrical steel sheet according to the present embodiment, the C content is preferably set to 0.010% or less. The C content is more preferably 0.005% or less. The C content is preferably as low as possible; however, even when the C content is reduced to less than 0.0001%, the effect of the microstructure control is saturated, and only the manufacturing cost increases. Therefore, the C content may be set to 0.0001% or more.

Si: 3.00% to 4.00%

Si (silicon) is an element that improves the iron loss characteristics by increasing the electric resistance of the grain-oriented electrical steel sheet. When the Si content is less than 3.00%, a sufficient effect of reducing an eddy-current loss cannot be obtained. Therefore, the Si content is preferably set to 3.00% or more. The Si content is more preferably 3.20% or more and still more preferably 3.50% or more.
On the other hand, when the Si content exceeds 4.00%, the grain-oriented electrical steel sheet is embrittled, and the passability significantly deteriorates. In addition, the workability of the grain-oriented electrical steel sheet deteriorates, and the steel sheet may break during rolling. Therefore, the Si content is preferably set to 4.00% or less. The Si content is more preferably 3.80% or less and still more preferably 3.70% or less.

Mn: 0.01% to 0.50%

Mn (manganese) is an element that bonds to S to form MnS during the manufacturing steps. This precipitate functions as an inhibitor (an inhibitor of normal grain growth) and develops secondary recrystallization in steel. Mn is also an element that further enhances the hot workability of steel. In a case where the Mn content is less than 0.01%, it is not possible to sufficiently obtain the above-described effect. Therefore, the Mn content is preferably set to 0.01% or more. The Mn content is more preferably 0.02% or more.
On the other hand, when the Mn content exceeds 0.50%, secondary recrystallization does not occur, and the magnetic characteristics of steel deteriorate. Therefore, in the base steel sheet of the grain-oriented electrical steel sheet according to the present embodiment, the Mn content is preferably set to 0.50% or less. The Mn content is more preferably 0.20% or less and still more preferably 0.10% or less.

N: 0.010% or less

N (nitrogen) is an element that bonds to Al to form AlN, which functions as an inhibitor in the manufacturing steps. However, when the N content exceeds 0.010%, the magnetic characteristics deteriorate due to an inhibitor excessively remaining in the base steel sheet. Therefore, in the base steel sheet of the grain-oriented electrical steel sheet according to the present embodiment, the N content is preferably set to 0.010% or less. The N content is more preferably 0.008% or less and still more preferably 0.005% or less.
On the other hand, the lower limit of the N content is not particularly specified; however, even when the N content is reduced to less than 0.001%, only the manufacturing cost increases. Therefore, the N content may be set to 0.001% or more.

sol. Al: 0.020% or less,

sol. Al (acid-soluble aluminum) is an element that bonds to N to form AlN that functions as an inhibitor during the manufacturing steps of the grain-oriented electrical steel sheet. However, when the sol. Al content of the base steel sheet exceeds 0.020%, the magnetic characteristics deteriorate due to the inhibitor excessively remaining in the base steel sheet. Therefore, in the base steel sheet of the grain-oriented electrical steel sheet according to the present embodiment, the sol. Al content is preferably set to 0.020% or less. The sol. Al content is more preferably 0.010% or less and still more preferably less than 0.001%. The lower limit of the sol. Al content is not particularly specified; however, even when the sol. Al content is reduced to less than 0.0001%, only the manufacturing cost increases. Therefore, the Sol. Al content may be set to 0.0001% or more.

S: 0.010% or less

S (sulfur) is an element that bonds to Mn to form MnS that functions as an inhibitor in the manufacturing steps. However, in a case where the S content exceeds 0.010%, the magnetic characteristics deteriorate due to an excessively remaining inhibitor. Therefore, in the base steel sheet of the grain-oriented electrical steel sheet according to the present embodiment, the S content is preferably set to 0.010% or less. The S content in the grain-oriented electrical steel sheet is preferably as low as possible. For example, the S content is less than 0.001%. However, even when the S content in the grain-oriented electrical steel sheet is reduced to less than 0.0001%, only the manufacturing cost increases. Therefore, the S content in the grain-oriented electrical steel sheet may be 0.0001% or more.

P: 0.030% or less

P (phosphorus) is an element that degrades the workability in rolling. When the P content is set to 0.030% or less, it is possible to suppress excessive deterioration of the rolling workability and to suppress breakage during manufacturing. From such a viewpoint, the P content is preferably set to 0.030% or less. The P content is more preferably 0.020% or less and still more preferably 0.010% or less.

The lower limit of the P content may be 0%; however, the detection limit of chemical analysis is 0.0001%, and thus the substantial lower limit of the P content in practical steel sheets is 0.0001%. In addition, P is also an element having an effect of improving the texture and improving the magnetic characteristics. In order to obtain this effect, the P content may be set to 0.001% or more or may be set to 0.005% or more.

Remainder: Fe and impurities

The chemical composition of the base steel sheet of the grain-oriented electrical steel sheet according to the present embodiment contains the above-described essential elements, and the remainder may be Fe and impurities. However, for the purpose of enhancing the magnetic characteristics and the like, as optional elements, Cu, Cr, Sn, Se, Sb, and Mo may be further contained in ranges to be shown below. These elements are also allowed to be contained as impurities.

In addition, even when, for example, any one or more of W, Nb, Bi, Ti, Ni, Co, and V are contained in a total of 1.0% or less as elements other than these, the effect of the grain-oriented electrical steel sheet according to the present embodiment is not impaired.

Here, the impurities are elements that are incorporated from ore or scraps as a raw material, manufacturing environments, or the like at the time of industrially manufacturing the base steel sheet and are allowed to be contained in contents at which the action of the grain-oriented electrical steel sheet according to the present embodiment is not adversely affected.

Cr: 0% to 0.50%

Cr (chromium) is an element that contributes to an increase in the Goss orientation occupancy ratio in the secondary recrystallization structure to improve the magnetic characteristics. In order to obtain the above-described effect, the Cr content is preferably set to 0.01% or more, more preferably set to 0.02% or more, and still more preferably set to 0.03% or more.

On the other hand, in a case where the Cr content exceeds 0.50%, a Cr oxide is formed, and the magnetic characteristics deteriorate. Therefore, the Cr content is preferably set to 0.50% or less. The Cr content is more preferably 0.30% or less and still more preferably 0.10% or less.

Sn: 0% to 0.50%

Sn (tin) is an element that contributes to improvement in the magnetic characteristics through the control of the primary recrystallization structure. In order to obtain the magnetic characteristics improvement effect, the Sn content is preferably set to 0.01% or more. The Sn content is more preferably 0.02% or more and still more preferably 0.03% or more.

On the other hand, in a case where the Sn content exceeds 0.50%, secondary recrystallization becomes unstable, and the magnetic characteristics deteriorate. Therefore, the Sn content is preferably set to 0.50% or less. The Sn content is more preferably 0.30% or less and still more preferably 0.10% or less.

Cu: 0% to 0.50%

Cu (copper) is an element that contributes to an increase in the Goss orientation occupancy ratio in the secondary recrystallization structure. Cu is an optional element in the base steel sheet of the grain-oriented electrical steel sheet according to the present embodiment. Therefore, the lower limit of the content becomes 0%; however, in order to obtain the above-described effect, the Cu content is preferably set to 0.01% or more. The Cu content is more preferably 0.02% or more and still more preferably 0.03% or more.

On the other hand, in a case where the Cu content exceeds 0.50%, the steel sheet is embrittled during hot rolling. Therefore, in the base steel sheet of the grain-oriented electrical steel sheet according to the present embodiment, the Cu content is preferably set to 0.50% or less. The Cu content is more preferably 0.30% or less and still more preferably 0.10% or less.

Se: 0% to 0.020%

Se (selenium) is an element having an effect of improving the magnetic characteristics. Therefore, Se may be contained. In a case where Se is contained, the Se content is preferably set to 0.001% or more in order to favorably exhibit the effect of improving the magnetic characteristics. The Se content is more preferably 0.003% or more and still more preferably 0.006% or more.

On the other hand, when the Se content exceeds 0.020%, the adhesion of the glass coating deteriorates. Therefore, the Se content is preferably set to 0.020% or less. The Se content is more preferably 0.015% or less and still more preferably 0.010% or less.

Sb: 0% to 0.50%

Sb (antimony) is an element having an effect of improving the magnetic characteristics. Therefore, Sb may be contained. In a case where Sb is contained, the Sb content is preferably set to 0.005% or more in order to favorably exhibit the effect of improving the magnetic characteristics. The Sb content is more preferably 0.01% or more and still more preferably 0.02% or more.

On the other hand, when the Sb content exceeds 0.50%, the adhesion of the glass coating significantly deteriorates. Therefore, the Sb content is preferably set to 0.50% or less. The Sb content is more preferably 0.30% or less and still more preferably 0.10% or less.

Mo: 0% to 0.10%

Mo (molybdenum) is an element having an effect of improving the magnetic characteristics. Therefore, Mo may be contained. In a case where Mo is contained, the Mo content is preferably set to 0.01% or more in order to favorably exhibit the effect of improving the magnetic characteristics. The Mo content is more preferably 0.02% or more and still more preferably 0.03% or more.

On the other hand, when the Mo content exceeds 0.10%, the cold rollability deteriorates, and there is a possibility that the base steel sheet may break. Therefore, the Mo content is preferably set to 0.10% or less. The Mo content is more preferably 0.08% or less and still more preferably 0.05% or less.

As described above, it is exemplified that the chemical composition of the base steel sheet of the grain-oriented electrical steel sheet according to the present embodiment contains the above-described essential elements with the remainder of Fe and impurities or the chemical composition contains the above-described essential elements and further contains one or more of the optional elements with the remainder of Fe and impurities.

The chemical composition of the base steel sheet of the grain-oriented electrical steel sheet according to the present embodiment can be measured after the glass coating and the tension-applied insulation coating formed on the surface are removed.

Specifically, the grain-oriented electrical steel sheet is immersed in a sodium hydroxide aqueous solution (80°C to 90°C) containing NaOH: 30 to 50 mass% and $H_2O$: 50 to 70 mass% for 7 to 10 minutes, whereby the tension-applied insulation coating is removed. The grain-oriented electrical steel sheet from which the tension-applied insulation coating has been removed is washed with water and, after being washed with water, dried with a warm air blower for little less than 1 minute. The dried grain-oriented electrical steel sheet (the grain-oriented electrical steel sheet not including the tension-applied insulation coating) is immersed in a hydrochloric acid aqueous solution (80°C to 90°C) containing 30 to 40 mass% of HCl for 1 to 10 minutes, whereby the glass coating is removed. The base steel sheet after immersion is washed with water and, after being washed with water, dried with a warm air blower for little less than 1 minute.

The base steel sheet can be taken out from the grain-oriented electrical steel sheet by the above-described step.

The chemical composition of such a base steel sheet is obtained by a well-known component analysis method. Specifically, chips are generated from the base steel sheet using a drill, the chips are collected, and the collected chips are dissolved in an acid to obtain a solution. ICP-AES is performed on the solution to perform an elemental analysis of the chemical composition.

Here, Si in the chemical composition of the base steel sheet is obtained by a method specified in JIS G 1212 (1997) (Methods for Determination of Silicon Content). Specifically, when the above-described chips are dissolved in an acid, silicon oxide precipitates as a precipitate, and thus this precipitate (silicon oxide) is filtered out with filter paper, and the mass is measured, thereby obtaining the Si content.

The C content and the S content are obtained by a well-known high-frequency combustion method (combustion-infrared absorption method). Specifically, the above-described solution is combusted by high-frequency heating in an oxygen stream, carbon dioxide and sulfur dioxide generated are detected, and the C content and the S content are obtained.

The N content is obtained using a well-known inert gas melting-thermal conductivity method.

(Strains and closure domains)

In the base steel sheet included in the grain-oriented electrical steel sheet according to the present embodiment, a plurality of linear strains (residual strains) formed by energy ray irradiation are present in a vicinity of the surface. Places where the strain is present can be analyzed using a residual strain measurement technique by an X-ray diffraction method in which the surface of the steel sheet is irradiated with an X-ray.

The plurality of linear strains extend in a direction intersecting with the rolling direction, the individual strains are substantially parallel to each other, and the linear strains adjacent to each other are formed at intervals (the distances from the center of a linear strain to the center of an adjacent linear strain in the rolling direction) of 10 mm or less in the rolling direction.

In addition, it is known that, particularly in a case where these strains are compressive strains in the rolling direction and tensile strains in the sheet thickness direction, regions magnetized in the sheet thickness direction, which are called closure domains, are formed in regions where the strain is present (regions where the strain is present when the surface of the steel sheet is viewed in a top view). In a case where the sizes of the closure domains are equal to or larger than a predetermined size, the 180° magnetic domain widths are segmented, the eddy-current loss reduces, and the iron loss reduces. On the other hand, when the closure domain sizes become large, magnetostriction when the closure domains have been excited by AC becomes large, and noise is apparently generated in transformers.

As a result of the present inventors' studies, it was found that, regarding the size of the closure domain that is formed and present in the region where the strain is present, in a case where a length d in the sheet thickness direction from the surface of the base steel sheet is 30 to 60 $\mu$m and a length w in the rolling direction is 200 $\mu$m or less, the iron loss decreases, and the noise problem becoming apparent can be suppressed.

In addition, additionally, the present inventors newly found that noise can be further reduced by controlling the strain distribution in the closure domain. That is, in a case where the ratio m/d of a depth m from the surface of the base steel sheet where the compressive strain in the rolling direction present in the closure domain exhibits the maximum value to the length d is in a range of more than 0.30 and less than 0.90, noise is further reduced.

In the present embodiment, the fact that the linear strains extend in a direction intersecting with the rolling direction indicates that the extension directions of the linear strains are within a range of 30° or less in terms of the deviation angle with respect to a direction perpendicular to the rolling direction (that is, are within a range of 60° to 120° with respect to the rolling direction). When the extension direction deviates from this angular range, the 180° magnetic domain segmentation action of the steel sheet becomes weak, and a sufficient iron loss reduction effect cannot be obtained.

The strain may be present continuously in a linear shape or may be present in one direction intermittently (for example, in a dotted line shape).

In addition, when the intervals in the rolling direction of the plurality of linear strains adjacent to each other are more than 10 mm, the magnetic domain segmentation effect of 180° magnetic domains becomes weak, and thus the iron loss improvement effect is insufficient. Therefore, each of the intervals in the rolling direction of linear strains adjacent to each other is set to 10 mm or less. It is preferable that the intervals of the plurality of linear strains are substantially equal intervals.

When the irradiation pitches become narrow (the intervals of the plurality of linear strains become narrow), the iron loss decreases; however, when the irradiation pitches become equal to or less than a threshold value, the total hysteresis loss increases, the iron loss deteriorates, and there are cases where the noise characteristics deteriorate. Therefore, each of the intervals in the rolling direction of linear strains adjacent to each other is preferably set to 3 mm or more.

The length of the strain in the sheet width direction is not limited, but the strain is preferably formed from one end to the other end portion of the base steel sheet in the width direction. In a case where the steel sheet is irradiated discontinuously (intermittently) with an energy ray, at the time of irradiating the steel sheet with the energy ray in the width direction at specific pitches, it is preferable that a major axis (length along the width direction) d00 of an energy ray-irradiated portion and a length d01 along the width direction between energy ray non-irradiated portions each sandwiched by two energy ray-irradiated portions satisfy $d01 \leq 3 \times d00$. d00 may be in a range of 50 $\mu$m or more and 50 mm or less.

In addition, as described above, the closure domains that are formed in association with the formation of the strains are a driving force of 180° magnetic domain segmentation, which is advantageous for a decrease in the iron loss, but there has been a problem in that the degree of magnetostriction is increased due to the closure domains and noise becomes large.

Conventionally, in the case of suppressing the deterioration of the noise characteristics, measures such as an increase in the energy ray irradiation pitches or a decrease in the energy ray input energy have been performed. However, such measures are merely means for improving the noise characteristics by sacrificing the effect of improving iron losses by energy ray irradiation to a certain extent with an assumption that the iron loss characteristics and the noise characteristics are in a trade-off relationship.

In contrast, as a result of the present inventors' studies, it was found that, in grain-oriented electrical steel sheets, when closure domain regions shallow below the surface (localized in the surface layer) are formed, it is possible to improve the iron loss characteristics while suppressing the deterioration of the noise characteristics. Specifically, it was found that, when the length d in the sheet thickness direction of the closure domain present in the region where the strain has been formed is set to 60 $\mu$m or less, it is possible to improve the iron loss characteristics while suppressing the deterioration of the noise characteristics. Therefore, the length d of the closure domain in the sheet thickness direction from the surface of the base steel sheet is set to 60 $\mu$m or less.

On the other hand, when the length d of the closure domain in the sheet thickness direction is less than 30 $\mu$m, the effect of improving the iron loss cannot be obtained. Therefore, the length d is set to 30 $\mu$m or more.

In addition, when the length w of the closure domain in the rolling direction of the base steel sheet is more than 200 $\mu$m, the volume of the closure domain increases, and the degree of magnetostriction increases. Therefore, the length w of the closure domain is set to 200 $\mu$m or less. The length w of the closure domain is preferably 150 $\mu$m or less and more preferably 100 $\mu$m or less. On the other hand, the length w of the closure domain in the rolling direction of the base steel sheet is preferably 50 $\mu$m or more.

In addition, the ratio m/d of the depth m from the surface of the base steel sheet where the compressive strain in the rolling direction present in the closure domain exhibits the maximum value to the length d is set in a range of more than 0.30 and less than 0.90. The reason for noise to be further reduced by the control of m/d is not clear, but it is presumed that, in a case where m/d is 0.90 or more, since the depth at which the compressive strain in the rolling direction is present in the closure domain is large, the closure domain is further stabilized, and an external magnetic field necessary for the closure domain to disappear becomes larger, whereby the harmonic component of the magnetostriction waveform becomes large and the noise becomes large. Therefore, m/d is set to less than 0.90. On the other hand, m/d within a range of 0.30 or less is difficult to realize within a range of laser or electron beam irradiation conditions in realistic operation. Therefore, m/d is set to more than 0.30.

The sizes of the closure domain (the length in the sheet thickness direction and the length in the rolling direction) are evaluated by observing a reflected electron image of the grain-oriented electrical steel sheet inclined in a scanning electron microscope.

Specifically, from the grain-oriented electrical steel sheet having the residual strains and the closure domains, a cross section perpendicular to the sheet width direction (a cross section in the sheet thickness direction) is obtained, and then processing strains on the surface of the same cross section are removed using an argon ion beam. At the time of obtaining the cross section perpendicular to the sheet width direction, the cross section is cut out so that the deviation angle from a {110} crystal plane of iron becomes less than 1° around an ND axis (a direction perpendicular to the sample surface). After that, the obtained cross section is irradiated with an electron beam in a scanning electron microscope to acquire a reflected electron image. The analysis sample is left inclined at approximately 45° to 80°. In a case where a magnetic domain is present in the analysis sample, the trajectories of incident electrons or reflected electrons change in the sample due to the Lorentz force depending on the magnetization direction in the magnetic domain, and thus a contrast is generated in the reflected electron image due to the magnetic domain. A closure domain is determined from this contrast, and the sizes thereof are regarded as the sizes of the closure domain.

A method for determining the closure domain from the contrast will be described. FIG. 1 shows an example of the reflected electron image of a cross section parallel to the sheet thickness direction and the rolling direction at a position where the steel sheet has been irradiated with an energy ray. As shown in FIG. 1, in the reflected electron image, it is observed that a region where a stripe-patterned contrast is observed (a region SPR surrounded by white spot lines and black spot lines in FIG. 1) is present in the steel sheet immediately below the portion irradiated with the energy ray. In this region, the magnetic domain structure is different from those of the surroundings due to the influence of residual strains introduced by energy ray irradiation. In the present embodiment, such a region (surrounded by the spot lines in FIG. 1) where the pixel intensities change at 2 to 10 $\mu$m intervals in the rolling direction within an amplitude of 0.4% or more of the average pixel intensity (striped-pattern contrast is shown) is regarded as the closure domain, and the sizes thereof are regarded as the sizes of the closure domain. The average pixel intensity mentioned herein refers to the average pixel intensity in the region where the striped pattern is observed.

A strain in the closure domain is evaluated by obtaining a cross section perpendicular to the sheet width direction (cross section in the sheet thickness direction) and then performing map measurement by an electron backscatter diffraction method (EBSD). At the time of obtaining the strain by EBSD, EBSD images are stored at a high resolution, and the shift between the images is measured, thereby converting the shift into a value of the strain. For example, the EBSD images are stored in 956 $\times$ 956 pixels and used for strain calculation. A method for converting the shift between the EBSD images into the strain is well known in theses, and the strain can be calculated with commercially available software such as CrossCourt4 manufactured by BLG Vantage or the like. Thereby, the depth from the surface of the steel sheet where the compressive strain in the rolling direction exhibits the maximum value is calculated.

<Glass coating>

In the grain-oriented electrical steel sheet according to the present embodiment, a glass coating is formed on the surface of the base steel sheet.

The glass coating is an inorganic coating containing magnesium silicate as a main component. The glass coating is formed by a reaction between an annealing separating agent containing magnesia (MgO) applied to the surface of the base steel sheet and a component on the surface of the base steel sheet during final annealing and has a composition derived from the annealing separating agent and the component of the base steel sheet (in more detail, a composition containing $Mg_2SiO_4$ as a main component).

<Tension-applied insulation coating>

In the grain-oriented electrical steel sheet according to the present embodiment, a tension-applied insulation coating is formed on the surface of the glass coating.

The tension-applied insulation coating applies electrical insulation properties to the grain-oriented electrical steel sheet, thereby reducing the eddy-current loss to improve the iron loss of the grain-oriented electrical steel sheet. In addition, according to the tension-applied insulation coating, in addition to the electrical insulation properties as described above, a variety of characteristics such as corrosion resistance, heat resistance, and slip resistance can be obtained.

Furthermore, the tension-applied insulation coating has a function of applying tension to the grain-oriented electrical steel sheet. When tension is applied to the grain-oriented electrical steel sheet to facilitate domain wall movement in the grain-oriented electrical steel sheet, it is possible to improve the iron loss of the grain-oriented electrical steel sheet.

The tension-applied insulation coating may be a well-known coating that is formed by, for example, applying and baking a coating liquid containing metallic phosphate and silica as main components on the surface of the glass coating.

<Sheet thickness of base steel sheet: 0.17 to 0.30 mm>

The sheet thickness of the base steel sheet of the grain-oriented electrical steel sheet according to the present embodiment is not limited, but is preferably 0.17 to 0.30 mm in the case of considering not only a low iron loss but also the application to cores of transformers, for which low noise and low vibration are required. As the sheet thickness is smaller, a more favorable effect of reducing the eddy-current loss can be acquired, and a more favorable iron loss can be obtained, and thus a preferable sheet thickness upper limit of the base steel sheet is 0.30 mm. However, in order to manufacture a base steel sheet of less than 0.17 mm, a special facility becomes necessary, which is not preferable in terms of production such as an increase in the manufacturing cost. Therefore, an industrially preferable lower limit of the sheet thickness is 0.17 mm.

<Manufacturing method>

The grain-oriented electrical steel sheet according to the present embodiment can be manufactured by a manufacturing method including the following steps.

(i) A hot rolling step of heating and then hot-rolling a steel piece including, by mass%, C: 0.01% to 0.20%, Si: 3.0% to 4.0%, sol. Al: 0.010% to 0.040%, Mn: 0.01% to 0.50%, N: 0.020% or less, S: 0.005% to 0.040%, P: 0.030% or less, Cu: 0% to 0.50%, Cr: 0% to 0.50%, Sn: 0% to 0.50%, Se: 0% to 0.020%, Sb: 0% to 0.50%, Mo: 0% to 0.10%, and a remainder: Fe and impurities to obtain a hot-rolled steel sheet,
(ii) a hot-rolled sheet annealing step of annealing the hot-rolled steel sheet to obtain a hot-rolled and annealed steel sheet,
(iii) a cold rolling step of performing cold rolling once or a plurality of times with process annealing therebetween on the hot-rolled and annealed steel sheet to obtain a cold-rolled steel sheet,
(iv) a decarburization annealing step of performing decarburization annealing on the cold-rolled steel sheet to obtain a decarburization-annealed steel sheet,
(v) a final annealing step of applying an annealing separating agent to the decarburization-annealed steel sheet and then performing final annealing to obtain a final-annealed steel sheet,
(vi) an insulation coating-forming step of forming a tension-applied insulation coating on a surface of the final-annealed steel sheet, and
(vii) a magnetic domain segmentation step of introducing linear thermal strains into a surface of the tension-applied insulation coating by energy ray irradiation.

Hereinafter, these steps will be described in detail. In the following description, in a case where conditions in each step are not described, it is possible to perform each step by appropriately applying well-known conditions.

<Hot rolling step>

In the hot rolling step, for example, a steel piece, such as a slab, including, by mass%, C: 0.01% to 0.20%, Si: 3.0% to 4.0%, sol. Al: 0.010% to 0.040%, Mn: 0.01% to 0.50%, N: 0.020% or less, S: 0.005% to 0.040%, P: 0.030% or less, Cu: 0% to 0.50%, Cr: 0% to 0.50%, Sn: 0% to 0.50%, Se: 0% to 0.020%, Sb: 0% to 0.50%, Mo: 0% to 0.10%, and a remainder: Fe and impurities is heated and then hot-rolled to obtain a hot-rolled steel sheet. The heating temperature of the steel piece is preferably set within a range of 1100°C to 1450°C. The heating temperature is more preferably 1300°C to 1400°C.

The hot rolling conditions are not particularly limited and may be set as appropriate based on characteristics to be required. The sheet thickness of the hot-rolled steel sheet is preferably in a range of, for example, 2.0 mm or more and 3.0 mm or less.

<Hot-rolled sheet annealing step>

The hot-rolled sheet annealing step is a step of annealing the hot-rolled steel sheet manufactured through the hot rolling step to produce a hot-rolled and annealed steel sheet. When such an annealing treatment is performed, recrystallization occurs in the steel sheet structure, and it becomes possible to realize favorable magnetic characteristics.

In the hot-rolled sheet annealing step according to the present embodiment, the hot-rolled steel sheet manufactured through the hot rolling step may be annealed according to a well-known method to produce a hot-rolled and annealed steel sheet. Means for heating the hot-rolled steel sheet upon annealing is not particularly limited, and it is possible to adopt a well-known heating method. In addition, the annealing conditions are also not particularly limited, and it is possible to anneal the hot-rolled steel sheet, for example, within a temperature range of 900°C to 1200 °C for 10 seconds to 5 minutes.

<Cold rolling step>

In the cold rolling step, cold rolling including a plurality of passes is performed on the hot-rolled and annealed steel sheet after the hot-rolled sheet annealing to obtain a cold-rolled steel sheet having a sheet thickness of 0.17 to 0.30 mm. The cold rolling may be cold rolling that is performed once (a series of cold rolling not including process annealing), or a plurality of times of cold rolling including process annealing may be performed by stopping cold rolling and performing process annealing at least once or more before the final pass of the cold rolling step.

In a case where process annealing is performed, the hot-rolled steel sheet is preferably retained at a temperature of 1000°C to 1200°C for 5 to 180 seconds. The annealing atmosphere is not particularly limited. The number of times of the process annealing is preferably 3 or less in consideration of the manufacturing cost.

In addition, before the cold rolling step, pickling may be performed on the surface of the hot-rolled and annealed steel sheet.

In the cold rolling step, the hot-rolled and annealed steel sheet may be cold-rolled according to a well-known method to produce a cold-rolled steel sheet. For example, it is possible to make the final rolling reduction fall into a range of 80% to 95%. In a case where the final rolling reduction is smaller than 80%, it is highly likely that Goss nuclei in which a {110}<001> orientation has a high development degree in the rolling direction cannot be obtained, which is not preferable. On the other hand, in a case where the final rolling reduction exceeds 95%, it is highly likely that secondary recrystallization becomes unstable in the final annealing step, which is a subsequent step, which is not preferable. When the final rolling reduction is made to fall into the above-described range, it is possible to obtain Goss nuclei in which a {110}<001 > orientation has a high development degree in the rolling direction and to suppress secondary recrystallization becoming unstable.

The final rolling reduction is the cumulative rolling reduction of cold rolling and is the cumulative rolling reduction of cold rolling after final process annealing in a case where process annealing is performed.

<Decarburization annealing step>

In the decarburization annealing step, decarburization annealing is performed on the obtained cold-rolled steel sheet to produce a decarburization-annealed steel sheet. In the decarburization annealing, the decarburization annealing conditions are not limited as long as the cold-rolled steel sheet is primarily recrystallized and C, which adversely affects the magnetic characteristics, can be removed from the steel sheet, and an exemplary example is that, for example, the cold-rolled steel sheet is retained in an annealing atmosphere (atmosphere in a furnace) where the degree of oxidation ($PH_2O/PH_2$) is set to 0.3 to 0.6 at an annealing temperature of 800°C to 900°C for 10 to 600 seconds.

<Nitriding treatment step>

A nitriding treatment may be performed between the decarburization annealing step and the final annealing step to be described below.

In the nitriding treatment step, for example, the decarburization-annealed steel sheet is held at approximately 700°C to 850°C in a nitriding treatment atmosphere (an atmosphere containing a gas having a nitriding ability such as hydrogen, nitrogen, or ammonia). Here, it is preferable to perform the nitriding treatment so that the N content of the decarburization-annealed steel sheet after the nitriding treatment step becomes 40 to 1000 ppm on a mass basis. When the N content of the decarburization-annealed steel sheet after the nitriding treatment is less than 40 ppm, AlN is not sufficiently precipitated in the decarburization-annealed steel sheet, and there is a possibility that AlN may not function as an inhibitor. Therefore, in a case where AlN is utilized as an inhibitor, the N content of the decarburization-annealed steel sheet after the nitriding treatment is preferably set to 40 ppm or more.

On the other hand, in a case where the N content of the decarburization-annealed steel sheet exceeds 1000 ppm, AlN is excessively present in the steel sheet even after the completion of secondary recrystallization in the final annealing. Such AlN causes iron loss deterioration. Therefore, the N content of the decarburization-annealed steel sheet after the nitriding treatment step is preferably set to 1000 ppm or less.

<Final annealing step>

In the final annealing step, a predetermined annealing separating agent is applied to the decarburization-annealed steel sheet obtained in the decarburization annealing step or further subjected to the nitriding treatment, and then final annealing is performed. The final annealing is ordinarily performed for a long time in a state where the steel sheet has been coiled in a coil shape. Therefore, prior to the final annealing, an annealing separating agent is applied to the decarburization-annealed steel sheet and dried for the purpose of preventing seizure between the inside and outside of the coil.

As the annealing separating agent to be applied, an annealing separating agent containing MgO as a main component (for example, containing 80 mass% or more of MgO) is used. The use of the annealing separating agent containing MgO as a main component makes it possible to form a glass coating on the surface of the base steel sheet. In a case where MgO is not a main component, no primary coating (glass coating) is formed. This is because the primary coating is a $Mg_2SiO_4$ or $MgAl_2O_4$ compound and Mg necessary for the formation reaction is deficient.

The final annealing may be performed under conditions that, for example, in an atmospheric gas containing hydrogen and nitrogen, the temperature is raised up to 1150°C to 1250°C and then the cold-rolled steel sheet is annealed for 10 to 60 hours.

<Insulation coating-forming step>

In the insulation coating-forming step, a tension-applied insulation coating is formed on one surface or both surfaces of the cold-rolled steel sheet after final annealing. The conditions for forming the tension-applied insulation coating are not particularly limited, and a treatment liquid may be applied and dried by a well-known method using a well-known insulation coating treatment liquid. When the tension-applied insulation coating is formed on the surface of the steel sheet, it becomes possible to further improve the magnetic characteristics of the grain-oriented electrical steel sheet.

The surface of the steel sheet on which the tension-applied insulation coating is to be formed may be a surface on which an optional pretreatment such as a degreasing treatment with an alkali or the like or a pickling treatment with hydrochloric acid, sulfuric acid, phosphoric acid, or the like has been performed before the application of the treatment liquid or may be a surface as final-annealed on which no pretreatments are performed.

The insulation coating that is formed on the surface of the steel sheet is not particularly limited as long as the insulation coating which is used as an insulation coating of grain-oriented electrical steel sheets, and it is possible to use a well-known insulation coating. As such an insulation coating, composite insulation coatings containing an inorganic substance as a main component and further containing an organic substance are exemplary examples. Here, the composite insulation coating is an insulation coating containing at least any inorganic substance such as a metal chromium acid salt, a metal phosphate salt, colloidal silica, a Zr compound, or a Ti compound as a main component, in which fine particles of an organic resin are dispersed. Particularly, from the viewpoint of reducing the environmental load during manufacturing, which has been highly requested in recent years, an insulation coating for which a metal phosphate, a Zr or Ti coupling agent, or a carbonate or ammonium salt thereof is used as a starting material is preferably used.

<Magnetic domain segmentation step>

In the magnetic domain segmentation step, the surface of the tension-applied insulation coating is irradiated with an energy ray (a laser beam or an electron beam), thereby introducing a plurality of linear strains that extend in a direction intersecting with the rolling direction near the surface of the base steel sheet (from the surface through the inside of the steel sheet). In the magnetic domain segmentation step, the plurality of linear strains (thermal strains generated by rapid heating by energy ray irradiation and subsequent rapid cooling) are formed at predetermined intervals in the rolling direction, and the intervals (that is, the intervals of linear strains adjacent to each other) are set to 10 mm or less in the rolling direction.

When the intervals of the plurality of linear strains in the rolling direction are more than 10 mm, the iron loss improvement effect is insufficient. Therefore, the strains are formed by irradiating the tension-applied insulation coating with an energy ray in the rolling direction at intervals of 10 mm or less.

The energy ray may be continuous wave irradiation or pulsed irradiation. Examples of the kind of the laser beam include a fiber laser, a YAG laser, or a $CO_2$ laser. The electron beam may be a continuous beam or an intermittent beam.

In addition, as described above, in order to obtain a grain-oriented electrical steel sheet satisfying both a low iron loss and low noise, strains are introduced into the base steel sheet, and closure domains are formed shallow below the surface.

Specifically, the tension-applied insulation coating is irradiated with the energy ray so that an energy ray power density Ip that is defined by P/S using an energy ray output P in a unit of W and an energy ray irradiation cross-sectional area S in a unit of $mm^2$ satisfies the following expression (1) and an energy ray input energy Up in a unit of J/mm that is defined by P/Vs using the energy ray output P and an energy ray scanning velocity Vs in a unit of mm/sec satisfies the following expression (2).

$$250 \leq Ip \leq 5,200 \quad \text{Expression (1)}$$

$$0.007 < Up \leq 0.050 \qquad \text{Expression (2)}$$

When Ip is less than 250, the irradiation effect cannot be sufficiently obtained, and the iron loss does not sufficiently improve. Therefore, Ip is 250 or more. On the other hand, when Ip becomes more than 5,200, the depth of the closure domain increases, and the noise characteristics deteriorate. Therefore, Ip is 5,200 or less. Ip is preferably 2000 or less, more preferably 1750 or less, and still more preferably 1500 or less. In this case, the noise characteristics are more excellent.

In addition, when Up is 0.007 or less, the irradiation effect cannot be sufficiently obtained, and the iron loss does not sufficiently improve. Therefore, Up is more than 0.007. On the other hand, when Up is more than 0.050, the depth of the closure domain increases, and the noise characteristics deteriorate. Therefore, Up is 0.050 or less.

Furthermore, in the method for manufacturing a grain-oriented electrical steel sheet according to the present embodiment, upon the irradiation with the energy ray, the beam aspect ratio is controlled so as to satisfy the following expression (5), the beam aspect ratio being defined by (dl/dc) using a diameter dl in a direction perpendicular to a beam scanning direction in a unit of $\mu$m and a diameter dc in the beam scanning direction of the energy ray in a unit of $\mu$m.

$$0.0010 < dl/dc < 1.0000 \quad (5)$$

When the beam aspect ratio is 0.0010 or less, heat is released in association with the beam irradiation, the input efficiency of the input energy decreases, and a sufficient magnetic domain segmentation effect (iron loss improvement effect) cannot be obtained. Therefore, the beam aspect ratio is more than 0.0010.

On the other hand, when the beam aspect ratio is 1.0000 or more, the volume where residual stress is present increases, and the noise characteristics become poor. Therefore, the beam aspect ratio is less than 1.0000. The beam aspect ratio is preferably less than 0.0500 and more preferably less than 0.0050.

In addition, the diameter dl of the energy ray in the direction perpendicular to the beam scanning direction in a unit of $\mu$m is made to satisfy the following expression (6).

$$10 \leq dl < 200 \quad (6)$$

For the energy ray such as a laser or an electron beam, it is industrially difficult to narrow the beam diameter to less than 10 $\mu$m. Therefore, dl is 10 or more.

On the other hand, when dl becomes 200 or more, excess thermal strains are introduced beyond the magnetic domain segmentation effect, whereby the noise characteristics deteriorate. Therefore, dl is less than 200. dl is preferably less than 150 and more preferably less than 100.

In the method for manufacturing a grain-oriented electrical steel sheet according to the present embodiment, as described above, irradiation is performed with an energy ray having a relatively strong Ip in a state where the beam aspect ratio is small. Such irradiation is normally not performed. This is because it is considered that a decrease in the beam aspect ratio leads to dispersion of irradiation energy and weakens the effect of increasing Ip.

However, the present inventors found for the first time that the above-described irradiation conditions are preferable as a result of studies based on a new finding that the spatial distribution control of strains is important from the viewpoint of reducing the iron loss and noise at the same time.

[Examples]

A hot rolling step was performed on slabs containing 3.0 mass% of Si (steel pieces containing, by mass%, C: 0.03%, Si: 3.0%, sol. Al: 0.040%, Mn: 0.05%, N: 0.005%, S: 0.005%, P: 0.01%, and a remainder of Fe and impurities). Specifically, the slabs were heated to 1350°C, and then hot rolling was performed on the slabs to manufacture hot-rolled steel sheets having a sheet thickness of 2.3 mm.

A hot-rolled sheet annealing step was performed on the hot-rolled steel sheets after the hot rolling step at an annealing temperature of 900°C to 1200°C for a retention time of 10 to 300 seconds.

After that, cold rolling was performed once or a plurality of times with process annealing therebetween to obtain 0.17 to 0.30 mm cold-rolled steel sheets.

Decarburization annealing was performed on these cold-rolled steel sheets under conditions where the cold-rolled steel sheets were retained at 800°C to 850°C for 100 to 200 seconds. As a decarburization annealing atmosphere, a well-known moist atmosphere containing hydrogen and nitrogen was formed.

After the decarburization annealing, steel sheets Nos. 4, 6, and 13 were retained at 700°C to 850°C for 10 to 60 seconds in a well-known nitriding treatment atmosphere (an atmosphere containing a gas having a nitriding ability such as hydrogen, nitrogen, or ammonia), and nitriding treatments were performed so that the N contents of the decarburization-annealed steel sheets after the nitriding treatment became 40 to 1000 ppm.

An annealing separating agent containing magnesium oxide (MgO) as a main component was applied to the surfaces of the steel sheets, and final annealing was performed on the steel sheets Nos. 4, 6, and 13 after the nitriding treatment and on the other steel sheets after the decarburization annealing. The final annealing temperature in final annealing was 1200°C, and the retention time at the final annealing temperature was 20 hours.

An insulation coating agent containing colloidal silica and phosphate as main components was applied to the surfaces (on glass coatings) of the steel sheets (grain-oriented electrical steel sheets) after cooling for final annealing and then baked to form tension-applied insulation coatings.

A grain-oriented electrical steel sheet with each steel sheet number was manufactured by the above-described steps.

[Analysis of chemical composition of base steel sheet]

The chemical composition of the base steel sheet of the grain-oriented electrical steel sheet with each steel sheet number before magnetic domain segmentation obtained by the above-described method was obtained by the following method. First, the tension-applied insulation coating was removed from the grain-oriented electrical steel sheet with each steel sheet number. Specifically, the grain-oriented electrical steel sheet was immersed in a sodium hydroxide aqueous solution (80°C to 90°C) containing NaOH: 30 to 50 mass% and $H_2O$: 50 to 70 mass% for 7 to 10 minutes. The grain-oriented electrical steel sheet after the immersion (the grain-oriented electrical steel sheet from which the tension-applied insulation coating had been removed) was washed with water. After the water washing, the grain-oriented electrical steel sheet was dried with a warm air blower for little less than 1 minute.

Next, the glass coating was removed from the grain-oriented electrical steel sheet including no tension-applied insulation coating. Specifically, the grain-oriented electrical steel sheet was immersed in a hydrochloric acid aqueous solution (80°C to 90°C) containing 30 to 40 mass% of HCL for 1 to 10 minutes. Therefore, the glass coating was removed from the base steel sheet. The base steel sheet after the immersion was washed with water. After the water washing, the grain-oriented electrical steel sheet was dried with a warm air blower for little less than 1 minute.

The base steel sheet was taken out from the grain-oriented electrical steel sheet by the above-described step.

The chemical composition of the taken-out base steel sheet was obtained by a well-known component analysis method. Specifically, chips were generated from the base steel sheet using a drill, and the chips are collected. The collected chips were dissolved in an acid to obtain a solution. ICP-AES was performed on the solution to perform an elemental analysis of the chemical composition. Si in the chemical composition of the base steel sheet was obtained by a method specified in JIS G 1212 (1997) (Methods for Determination of Silicon Content). Specifically, when the above-described chips were dissolved in an acid, silicon oxide was precipitated as a precipitate. This precipitate (silicon oxide) was filtered out with filter paper, and the mass was measured, thereby obtaining the Si content. The C content and the S content were obtained by a well-known high-frequency combustion method (combustion-infrared absorption method). Specifically, the above-described solution was combusted by high-frequency heating in an oxygen stream, carbon dioxide and sulfur dioxide generated were detected, and the C content and the S content were obtained. The N content was obtained using a well-known inert gas melting-thermal conductivity method. The chemical composition of the base steel sheet was obtained by the above-described analysis method. The chemical composition of the steel sheet (base steel sheet) with each steel sheet number was, by mass%, C: 0.001%, Si: 3.0%, sol. Al: less than 0.001%, Mn: 0.05%, N: 0.002%, S: less than 0.001%, P: 0.01%, and a remainder: Fe and impurities.

[Evaluation of magnetic characteristics]

Although not shown in the table, in order to evaluate the iron loss improvement ratio, the iron loss before magnetic domain segmentation was evaluated. A sample having a width of 60 mm and a length of 300 mm including a sheet width center position was collected from the grain-oriented electrical steel sheet with each steel sheet number. The length direction of the sample was set to be parallel to the rolling direction. The collected sample was retained at 800°C for 2 hours in a nitrogen atmosphere having a dew point of 0°C or lower, and strains introduced at the time of sample collection were removed.

The iron loss $W_{17/50}$ (W/kg) at a frequency set to 50 Hz and a maximum magnetic flux density set to 1.7 T was measured in accordance with JIS C2556 (2015) using this sample.

After that, magnetic domain segmentation was performed on the grain-oriented electrical steel sheet with each steel sheet number by performing laser irradiation or electron beam irradiation on the surface of the steel sheet under conditions shown in Table 1 using a fiber laser or an electron beam, then the closure domain sizes were investigated, and evaluation tests of noise characteristics and magnetic characteristics were performed. The laser irradiation was performed in an atmosphere, and the electron beam irradiation was performed in a vacuum (degree of vacuum: 0.2 Pa).

[Table 1]

| Steel sheet No. | Magnetic domain segmentation step | | | | | | | |
|---|---|---|---|---|---|---|---|---|
| | Energy ray | Ip | Up | dl/dc | dl | Kind of energy ray | Angle between energy ray scanning direction and direction perpendicular to rolling direction | Interval in rolling direction |
| | | W/mm² | J/mm | | μm | | Degrees | mm |
| 1 | Laser | 267 | 0.006 | 0.0524 | 100 | Laser | 8 | 6 |
| 2 | Laser | 251 | 0.008 | 0.0393 | 100 | Laser | 28 | 5 |
| 3 | Laser | 293 | 0.008 | 0.0287 | 80 | Laser | 5 | 4 |
| 4 | Laser | 375 | 0.015 | 0.0212 | 90 | Laser | 8 | 8 |
| 5 | Laser | 589 | 0.019 | 0.0894 | 160 | Laser | 10 | 5 |
| 6 | Laser | 440 | 0.026 | 0.0605 | 170 | Laser | 18 | 6 |
| 7 | Laser | 409 | 0.045 | 0.0516 | 190 | Laser | 17 | 8 |
| 8 | Laser | 650 | 0.033 | 0.0628 | 200 | Laser | 22 | 5 |
| 9 | Laser | 84 | 0.080 | 0.0091 | 200 | Laser | 10 | 9 |
| 10 | Laser | 550 | 0.037 | 0.0115 | 105 | Laser | 15 | 3 |
| 11 | Laser | 283 | 0.043 | 0.0082 | 125 | Laser | 3 | 5 |
| 12 | Laser | 255 | 0.036 | 0.0059 | 150 | Laser | 3 | 4 |
| 13 | Laser | 1800 | 0.045 | 0.0452 | 120 | Laser | 9 | 7 |
| 14 | Laser | 90 | 0.036 | 0.0027 | 130 | Laser | 20 | 6 |

(continued)

| Steel sheet No. | Magnetic domain segmentation step | | | | | | | |
|---|---|---|---|---|---|---|---|---|
| | Energy ray | Ip | Up | dl/dc | dl | Kind of energy ray | Angle between energy ray scanning direction and direction perpendicular to rolling direction | Interval in rolling direction |
| | | W/mm² | J/mm | | μm | | Degrees | mm |
| 15 | Laser | 95 | 0.020 | 0.0293 | 200 | Laser | 5 | 4 |
| 16 | Laser | 260 | 0.038 | 0.0092 | 190 | Laser | 1 | 7 |
| 17 | Laser | 1048 | 0.044 | 0.0293 | 140 | Laser | 1 | 3 |
| 18 | Laser | 1643 | 0.042 | 0.0611 | 165 | Laser | 20 | 5 |
| 19 | Laser | 300 | 0.053 | 0.0072 | 135 | Laser | 10 | 6 |
| 20 | Laser | 252 | 0.048 | 0.0061 | 195 | Laser | 10 | 8 |
| 21 | Laser | 5250 | 0.008 | 2.5447 | 180 | Laser | 22 | 7 |
| 22 | Laser | 5125 | 0.008 | 0.7000 | 197 | Laser | 1 | 10 |
| 23 | Laser | 2000 | 0.050 | 0.1278 | 197 | Laser | 1 | 12 |
| 24 | Laser | 1923 | 0.008 | 0.0302 | 50 | Laser | 3 | 7 |
| 25 | Laser | 5250 | 0.004 | 0.1963 | 50 | Laser | 6 | 5 |
| 26 | Laser | 250 | 0.037 | 0.0623 | 225 | Laser | 15 | 3 |
| 27 | Electron beam | 1600 | 0.040 | 0.0600 | 170 | Electron beam | 3 | 5 |
| 28 | Laser | 1100 | 0.030 | 0.0008 | 20 | Laser | 2 | 5 |
| 29 | Laser | 1070 | 0.050 | 1.3000 | 200 | Laser | 2 | 5 |

[Closure domain distribution of energy ray-treated steel sheet]

The sizes of the closure domain in a cross section in the sheet thickness direction of each grain-oriented electrical steel sheet were evaluated by the above-described method by observing a reflected electron image in a scanning electron microscope. From the grain-oriented electrical steel sheet having a residual strain and a closure domain, a cross section perpendicular to the sheet width direction (a cross section in a sheet thickness direction) was obtained, and then processing strains on the surface of the same cross section were removed using an argon ion beam at an accelerating voltage of 1 kV. At the time of obtaining the cross section perpendicular to the sheet width direction, the cross section was cut out so that the deviation angle from a {110} crystal plane of iron became less than 1° around the ND axis (a direction perpendicular to the sample surface). The sample was inclined at 70 degrees in the scanning electron microscope, and the cross section was irradiated with an electron beam to obtain a reflected electron image. The accelerating voltage of the electron beam was set to 20 kV. The evaluation results are shown in Table 2.

[Evaluation of strain in closure domain]

Strains (residual strains) in the closure domain were evaluated by obtaining a cross section in the sheet thickness direction and then performing map measurement by an electron backscatter diffraction method (EBSD). A sample inclined at 70 degrees was irradiated with an electron beam to obtain an EBSD image. The EBSD images were stored in 956 × 956 pixels and used for strain calculation. Strain calculation was performed with CrossCourt4 software by BLG Vantage. Therefore, the depth from the surface of the steel sheet where the compressive strain in the rolling direction exhibited the maximum value was calculated.

[Evaluation of noise characteristics]

A sample having a width of 100 mm and a length of 500 mm was collected from each grain-oriented electrical steel sheet. The length direction of the sample was made to correspond to the rolling direction RD, and the width direction was made to correspond to the sheet width direction TD.

From the sample, magnetostriction was measured by an AC magnetostriction measuring method using a magnetostriction measuring instrument. As the magnetostriction measuring instrument, an apparatus including a laser Doppler vibrometer, an exciting coil, an exciting power supply, a magnetic flux detecting coil, an amplifier, and an oscilloscope was used.

Specifically, an AC magnetic field was applied to the sample so that the maximum magnetic flux density was 1.7 T in the rolling direction. A change in the length of the sample caused by the expansion and contraction of the magnetic domains was measured with the laser Doppler vibrometer, and a magnetostriction signal was obtained. Fourier analysis was performed on the obtained magnetostriction signal to obtain an amplitude Cn of each frequency component fn (n is a natural number of 1 or more) of the magnetostriction signal. A magnetostriction rate level LVA (dB) represented by the following expression was obtained using an A correction coefficient $\alpha$n of each frequency component fn.

$$\mathrm{LVA} = 20 \times \mathrm{Log}(\sqrt{(\Sigma(\rho c \times 2\pi \times fn \times \alpha n \times Cn/\sqrt{2})^2)}/\mathrm{Pe0})$$

Here, $\rho$c is an intrinsic acoustic resistance, and $\rho$c was set to 400. Pe0 was the minimum audible sound pressure, and Pe0 = $2 \times 10^{-5}$ (Pa) was used. As the A correction coefficient $\alpha$n, values shown in Table 2 of JIS C 1509-1 (2005) were used.

Based on the obtained magnetostriction rate level (LVA), the noise characteristics were evaluated according to the following criteria. When the magnetostriction rate level was less than 60 dBA, the grain-oriented electrical steel sheet was determined to be excellent in terms of noise characteristics.

The results are shown in Table 2.

[Evaluation of magnetic characteristics]

A sample having a width of 60 mm and a length of 300 mm including a sheet width center position was collected from the grain-oriented electrical steel sheet with each steel sheet number. The length direction of the sample was set to be parallel to the rolling direction. The collected sample was retained at 800°C for 2 hours in a nitrogen atmosphere having a dew point of 0°C or lower, and strains introduced at the time of sample collection were removed.

The magnetic flux density (T) was obtained by a single sheet magnetic characteristics test (SST test) in accordance with JIS C2556 (2015) using this sample. Specifically, a magnetic field of 800 A/m was applied to the sample, and the magnetic flux density (T) was obtained.

Furthermore, the iron loss $W_{17/50}$ (W/kg) at a frequency set to 50 Hz and a maximum magnetic flux density set to 1.7 T was measured in accordance with JIS C2556 (2015) using the sample.

The measurement results are shown in Table 2.

Here, the improvement ratio (%) of the iron loss before and after the energy ray irradiation was defined by 100 $\times$ difference in iron loss before and after energy ray irradiation/iron loss before energy ray irradiation, and an improvement ratio of the iron loss of 5.0% or more was determined as acceptable. The measurement results of the iron loss improvement ratio are collectively shown in Table 2.

[Table 2]

| Steel sheet No. | Residual strain | | | Closure domain | | | Distribution of residual strains in sheet thickness direction | m/d | Magnetic characteristics | | | Noise characteristics | Note |
|---|---|---|---|---|---|---|---|---|---|---|---|---|---|
| | Angle between extension direction of residual strain and direction perpendicular to rolling direction | Interval in rolling direction | Linear shape | Length in sheet thickness direction d | Length in rolling direction w | Thickness of base steel sheet | Depth where maximum value of compressive strain in rolling direction is present | | Iron loss $W_{17/50}$ | Magnetic flux density | Iron loss improvement ratio | | |
| | Degrees | mm | | μm | μm | mm | μm | - | W/kg | T | % | dB | |
| 1 | 8 | 6 | Continuous | 29 | 100 | 0.27 | 25 | 0.87 | 0.82 | 1.91 | 2.4 | 49 | Comparative Example |
| 2 | 28 | 5 | Intermittent | 30 | 100 | 0.17 | 26 | 0.87 | 0.72 | 1.91 | 7.3 | 49 | Invention Example |
| 3 | 5 | 4 | Continuous | 31 | 80 | 0.17 | 27 | 0.86 | 0.73 | 1.91 | 6.9 | 49 | Invention Example |
| 4 | 8 | 8 | Continuous | 37 | 90 | 0.22 | 32 | 0.87 | 0.74 | 1.91 | 8.1 | 51 | Invention Example |
| 5 | 10 | 5 | Continuous | 41 | 160 | 0.22 | 34 | 0.83 | 0.73 | 1.91 | 10.4 | 55 | Invention Example |
| 6 | 18 | 6 | Intermittent | 41 | 170 | 0.22 | 35 | 0.84 | 0.72 | 1.91 | 10.5 | 55 | Invention Example |
| 7 | 17 | 8 | Continuous | 44 | 190 | 0.22 | 37 | 0.84 | 0.72 | 1.90 | 10.8 | 56 | Invention Example |
| 8 | 22 | 5 | Continuous | 45 | 200 | 0.22 | 38 | 0.84 | 0.71 | 1.91 | 12.2 | 58 | Invention Example |
| 9 | 10 | 9 | Intermittent | 24 | 200 | 0.27 | 20 | 0.84 | 0.82 | 1.92 | 2.4 | 51 | Comparative Example |
| 10 | 15 | 3 | Continuous | 45 | 105 | 0.17 | 35 | 0.78 | 0.70 | 1.90 | 10.4 | 54 | Invention Example |
| 11 | 3 | 5 | Continuous | 41 | 125 | 0.27 | 34 | 0.82 | 0.76 | 1.91 | 9.4 | 54 | Invention Example |
| 12 | 3 | 4 | Continuous | 35 | 150 | 0.17 | 29 | 0.83 | 0.71 | 1.91 | 9.6 | 53 | Invention Example |
| 13 | 9 | 7 | Intermittent | 54 | 120 | 0.17 | 26 | 0.48 | 0.68 | 1.90 | 12.4 | 58 | Invention Example |
| 14 | 20 | 6 | Continuous | 28 | 130 | 0.27 | 24 | 0.86 | 0.83 | 1.92 | 1.2 | 48 | Comparative Example |
| 15 | 5 | 4 | Continuous | 30 | 200 | 0.17 | 28 | 0.93 | 0.73 | 1.91 | 6.9 | 61 | Comparative Example |
| 16 | 1 | 7 | Continuous | 34 | 190 | 0.22 | 30 | 0.89 | 0.73 | 1.91 | 10.0 | 54 | Invention Example |
| 17 | 1 | 3 | Intermittent | 50 | 140 | 0.22 | 23 | 0.46 | 0.71 | 1.90 | 11.9 | 58 | Invention Example |
| 18 | 20 | 5 | Intermittent | 53 | 165 | 0.22 | 25 | 0.47 | 0.71 | 1.90 | 12.4 | 58 | Invention Example |
| 19 | 10 | 6 | Intermittent | 63 | 135 | 0.27 | 31 | 0.49 | 0.74 | 1.90 | 12.2 | 61 | Comparative Example |
| 20 | 10 | 8 | Continuous | 31 | 197 | 0.17 | 27 | 0.88 | 0.70 | 1.91 | 10.5 | 55 | Invention Example |
| 21 | 22 | 7 | Continuous | 62 | 180 | 0.27 | 29 | 0.47 | 0.73 | 1.89 | 13.2 | 63 | Comparative Example |
| 22 | 1 | 10 | Continuous | 57 | 200 | 0.17 | 25 | 0.44 | 0.66 | 1.90 | 14.8 | 59 | Invention Example |
| 23 | 1 | 12 | Continuous | 56 | 200 | 0.17 | 25 | 0.45 | 0.75 | 1.91 | 3.8 | 53 | Comparative Example |
| 24 | 3 | 7 | Continuous | 34 | 50 | 0.22 | 23 | 0.67 | 0.73 | 1.90 | 9.9 | 57 | Invention Example |
| 25 | 6 | 5 | Continuous | 61 | 50 | 0.22 | 30 | 0.49 | 0.71 | 1.90 | 12.3 | 61 | Comparative Example |
| 26 | 15 | 3 | Continuous | 29 | 225 | 0.17 | 22 | 0.76 | 0.65 | 1.90 | 16.7 | 61 | Comparative Example |
| 27 | 3 | 5 | Intermittent | 60 | 200 | 0.22 | 28 | 0.47 | 0.72 | 1.90 | 10.4 | 59 | Invention Example |
| 28 | 3 | 4 | Continuous | 10 | 20 | 0.22 | 3 | 0.30 | 0.73 | 1.90 | 1.5 | 48 | Comparative Example |
| 29 | 4 | 5 | Continuous | 63 | 200 | 0.22 | 32 | 0.51 | 0.71 | 1.91 | 15.0 | 63 | Comparative Example |

As is clear from Table 1 and Table 2, in present invention examples, the closure domain sizes (d and w) and the ratios (m/d) of the depth m from the surface of the base steel sheet where a compressive strain in the rolling direction present in the closure domain exhibited the maximum value to d were within the scope of the present invention. As a result, the magnetic characteristics were excellent, the improvement ratios of the iron loss were also high, and the noise characteristics were excellent.

On the other hand, in comparative examples, the closure domain sizes or m/d was outside the scope of the present invention. As a result, at least one of the iron loss improvement ratio or the noise characteristics was poor.

In a steel sheet No. 1, the energy ray input energy Up was low, and, in a steel sheet No. 14, the energy ray power density Ip was low, and the lengths of the closure domains in the sheet thickness direction were not sufficient. As a result, the iron loss improvement ratios did not reach 5.0%.

In a steel sheet No. 9, the energy ray input energy Up was large but the energy ray power density Ip was low, and thus the length of the closure domain in the sheet thickness direction was not sufficient. As a result, the iron loss improvement ratios did not reach 5.0%.

In a steel sheet No. 15, the energy ray power density Ip was low, and m/d was large. As a result, the noise characteristics were poor.

In a steel sheet No. 19, the energy ray input energy Up was too large, and thus the length of the closure domain in the sheet thickness direction was too long. As a result, the noise characteristics were poor.

In a steel sheet No. 21, the energy ray power density Ip was too high, and thus the length of the closure domain in the sheet thickness direction was too long. As a result, the noise characteristics were poor.

In a steel sheet No. 23, the interval in the rolling direction of the linear strains adjacent to each other exceeded 10 mm. As a result, the iron loss improvement ratios did not reach 5.0%.

In a steel sheet No. 25, the energy ray input energy Up was small, the energy ray power density Ip was high, and the length of the closure domain in the sheet thickness direction was too long. As a result, the noise characteristics were poor.

In a steel sheet No. 26, the length in the rolling direction of an energy ray irradiation mark was too long, and the length in the rolling direction of the closure domain exceeded 200 $\mu$m. As a result, the noise characteristics were poor.

In a steel sheet No. 28, the aspect ratio of an energy ray irradiation mark was too small, a sufficient energy ray irradiation effect could not be obtained due to the influence of heat release, and the length of the closure domain in the sheet thickness direction was not sufficient. As a result, the iron loss improvement ratios did not reach 5.0%.

In a steel sheet No. 29, the aspect ratio of an energy ray irradiation mark was too large, and the length of the closure domain in the sheet thickness direction was too long. As a result, the noise characteristics were poor.

[Industrial Applicability]

According to the present invention, it is possible to provide a grain-oriented electrical steel sheet having excellent iron loss characteristics and noise characteristics and a method for manufacturing the same. Therefore, the present invention is highly industrially applicable.

[Brief Description of the Reference Symbols]

ND: Sheet surface vertical direction
TD: Sheet width direction
RD: Rolling direction
S: Surface
SPR: Region where a stripe pattern is observed
EIrD: Energy ray irradiation direction

**Claims**

1. A grain-oriented electrical steel sheet comprising:

   a base steel sheet;
   a glass coating formed on the base steel sheet; and
   a tension-applied insulation coating formed on the glass coating,
   wherein, in the base steel sheet, a plurality of linear strains that extend continuously or intermittently in a direction intersecting with a rolling direction are present,
   intervals in the rolling direction of the plurality of linear strains adjacent to each other are 10 mm or less,
   in a region where the strains are present, a closure domain is present, a length d of the closure domain in a sheet thickness direction from a surface of the base steel sheet is 30 to 60 $\mu$m, a length w of the closure domain in the rolling direction is 200 $\mu$m or less, and
   a ratio m/d of a depth m from the surface of the base steel sheet where a compressive strain in the rolling direction present in the closure domain exhibits a maximum value, to the length d is in a range of more than 0.30 and less than 0.90.

2. A method for manufacturing a grain-oriented electrical steel sheet comprising:

   a magnetic domain segmentation step of, with respect to a grain-oriented electrical steel sheet including a base steel sheet, a glass coating formed on the base steel sheet, and a tension-applied insulation coating formed on the glass coating, irradiating a surface of the tension-applied insulation coating with an energy ray to introduce a plurality of linear strains that extend in a direction intersecting with a rolling direction into a vicinity of a surface of the base steel sheet,

wherein, in the magnetic domain segmentation step,

among the plurality of linear strains, intervals in the rolling direction of linear strains adjacent to each other are 10 mm or less,

an energy ray power density Ip in a unit of W/mm$^2$ that is defined by (P/S) using an energy ray output P in a unit of W and an energy ray irradiation cross-sectional area S in a unit of mm$^2$ satisfies the following expression (1),

an energy ray input energy Up in a unit of J/mm that is defined by (P/Vs) using the energy ray output P and an energy ray scanning velocity Vs in a unit of mm/sec satisfies the following expression (2), and

a beam aspect ratio that is defined by (dl/dc) using a diameter dl in a direction perpendicular to a beam scanning direction and a diameter dc in the beam scanning direction of the energy ray in a unit of μm and the dl each satisfy the following expression (3) and the following expression (4),

$$250 \leq Ip \leq 5{,}200 \quad (1)$$

$$0.007 < Up \leq 0.050 \quad (2)$$

$$0.0010 < dl/dc < 1.0000 \quad (3)$$

$$10 \leq dl < 200 \quad (4).$$

FIG. 1

## INTERNATIONAL SEARCH REPORT

International application No.

**PCT/JP2022/015193**

### A. CLASSIFICATION OF SUBJECT MATTER

*C21D 8/12*(2006.01)i; *C22C 38/00*(2006.01)i; *C22C 38/60*(2006.01)n; *H01F 1/147*(2006.01)i
FI: C22C38/00 303U; C21D8/12 D; H01F1/147 183; C22C38/60

According to International Patent Classification (IPC) or to both national classification and IPC

### B. FIELDS SEARCHED

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2012/172624 A1 (NIPPON STEEL & SUMITOMO METAL CORP.) 20 December 2012 (2012-12-20)<br>claims, paragraphs [0019], [0033]-[0036] | 1-2 |
| A | JP 2013-139590 A (JFE STEEL CORP.) 18 July 2013 (2013-07-18)<br>entire text, all drawings | 1-2 |
| A | JP 2016-156047 A (JFE STEEL CORP.) 01 September 2016 (2016-09-01)<br>entire text, all drawings | 1-2 |
| A | JP 11-279645 A (NIPPON STEEL CORP.) 12 October 1999 (1999-10-12)<br>entire text, all drawings | 1-2 |
| A | WO 2020/130645 A1 (POSCO) 25 June 2020 (2020-06-25)<br>entire text, all drawings | 1-2 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/015193**

| Patent document cited in search report | | | Publication date (day/month/year) | Patent family member(s) | | | Publication date (day/month/year) |
|---|---|---|---|---|---|---|---|
| WO | 2012/172624 | A1 | 20 December 2012 | CN | 103562418 | A | |
| | | | | claims, paragraphs [0037], [0057]-[0064] | | | |
| | | | | KR | 10-2013-0140213 | A | |
| | | | | BR | 112013030922 | A2 | |
| JP | 2013-139590 | A | 18 July 2013 | US | 2014/0338792 | A1 | |
| | | | | entire text, all drawings | | | |
| | | | | EP | 2799580 | A1 | |
| | | | | CN | 104093870 | A | |
| | | | | KR | 10-2014-0103995 | A | |
| | | | | WO | 2013/100200 | A1 | |
| JP | 2016-156047 | A | 01 September 2016 | US | 2018/0037965 | A1 | |
| | | | | entire text, all drawings | | | |
| | | | | WO | 2016/136176 | A1 | |
| | | | | EP | 3263720 | A1 | |
| | | | | CA | 2975245 | A1 | |
| | | | | CN | 107250391 | A | |
| | | | | KR | 10-2017-0107575 | A | |
| | | | | MX | 2017010758 | A | |
| | | | | BR | 112017018093 | A2 | |
| | | | | RU | 2679812 | C1 | |
| JP | 11-279645 | A | 12 October 1999 | (Family: none) | | | |
| WO | 2020/130645 | A1 | 25 June 2020 | US | 2022/0051837 | A1 | |
| | | | | entire text, all drawings | | | |
| | | | | JP | 2022-515236 | A | |
| | | | | EP | 3901971 | A1 | |
| | | | | KR | 10-2020-0076508 | A | |
| | | | | CN | 113196422 | A | |

Form PCT/ISA/210 (patent family annex) (January 2015)

**EP 4 317 468 A1**

**REFERENCES CITED IN THE DESCRIPTION**

**Patent documents cited in the description**

- JP 2021053620 A
- JP 4669565 B
- JP 4510757 B
- JP 3361709 B
- JP 6060988 B
- JP 6176282 B

- JP 6169695 B
- JP 6245296 B
- WO 2014068962 A
- JP 5954421 B
- WO 2013099272 A